(19) Europäisches Patentamt
European Patent Office
Office européen des brevets

(11) **EP 1 933 272 B1**

(12) **EUROPEAN PATENT SPECIFICATION**

(45) Date of publication and mention
of the grant of the patent:
**10.06.2009 Bulletin 2009/24**

(51) Int Cl.:
***G06T 5/00*** *(2006.01)*

(21) Application number: **07117216.7**

(22) Date of filing: **26.09.2007**

(54) **Method of generating a contrast enhanced image using multiscale analysis**

Multiskalenbasiertes Verfahren zu Generierung eines kontrastverstärkten Bildes

Procédé multi-échelle de génération d'une image améliorée à contraste

(84) Designated Contracting States:
**BE DE FR GB NL**

(30) Priority: **11.12.2006 EP 06125766**

(43) Date of publication of application:
**18.06.2008 Bulletin 2008/25**

(73) Proprietor: **Agfa HealthCare NV**
**2640 Mortsel (BE)**

(72) Inventors:
• **Bertens, Tom**
**2640 Mortsel (BE)**
• **Vuylsteke, Pieter**
**2640 Mortsel (BE)**

(56) References cited:
**US-B1- 6 731 790**          **US-B1- 6 788 826**

• **JIAN LU ET AL: "Contrast enhancement via multiscale gradient transformation" PROCEEDINGS OF THE INTERNATIONAL CONFERENCE ON IMAGE PROCESSING (ICIP) AUSTIN, NOV. 13 - 16, 1994, LOS ALAMITOS, IEEE COMP. SOC. PRESS, US, vol. VOL. 3 CONF. 1, 13 November 1994 (1994-11-13), pages 482-486, XP010146217 ISBN: 0-8186-6952-7**
• **VUYLSTEKE P ET AL: "Image Processing in Computed Radiography" COMPUTERIZED TOMOGRAPHY FOR INDUSTRIAL APPLICATIONS AND IMAGE PROCESSING IN RADIOLOGY, 15 March 1999 (1999-03-15), pages 87-101, XP002313672**

**Description**

FIELD OF THE INVENTION

The present invention relates to a method for enhancing the contrast of an image that is represented by a digital signal.

BACKGROUND OF THE INVENTION

Commonly images represented by a digital signal such as medical images are subjected to image processing during or prior to displaying or hard copy recording.

The conversion of grey value pixels into values suitable for reproduction or displaying may comprise a multi-scale image processing method (also called multi-resolution image processing method) by means of which the contrast of the image is enhanced.

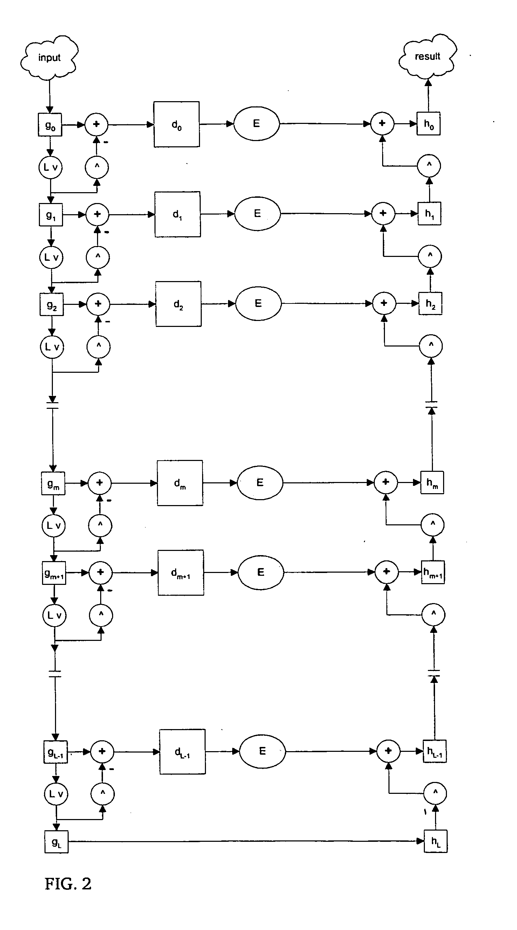

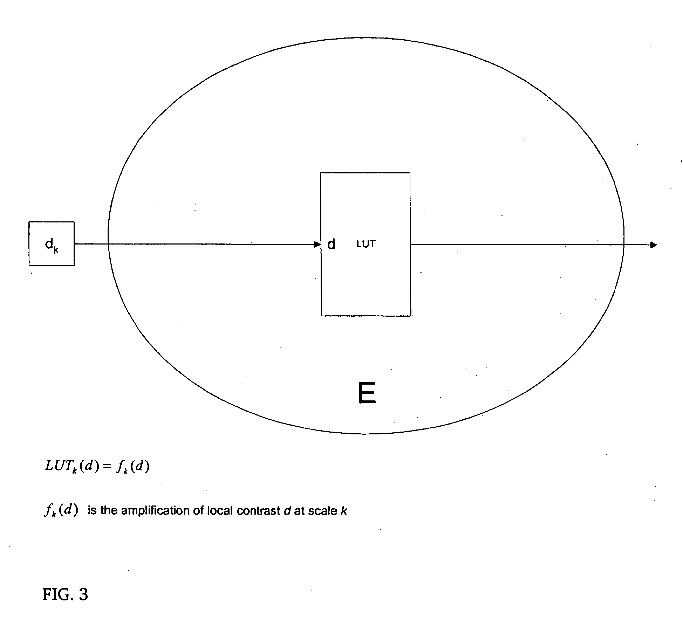

According to such a multi-scale image processing method an image, represented by an array of pixel values, is processed by applying the following steps. First the original image is decomposed into a sequence of detail images at multiple scales and occasionally a residual image. Next, the pixel values of the detail images are modified by applying to these pixel values at least one conversion. Finally, a processed image is computed by applying a reconstruction algorithm to the residual image and the modified detail images. Such a method is illustrated in figures 2 and 3.

There are limits for the behavior of the conversion functions. Grey value transitions in the image can be distorted to an extent that the appearance becomes unnatural if the conversion functions are excessively non-linear. The distortions are more pronounced in the vicinity of significant grey level transitions, which may result in overshoots at step edges and loss of homogeneity in regions of low variance facing strong step edges. The risk of creating artifacts becomes more significant for CT images since they have sharper grey level transitions, e.g. at the interface of soft tissue and contrast media. One has to be careful using the multi-scale techniques on CT images.

In US 6 731 790 B1 a method is described in which artefacts are corrected in an image that is represented by a digital signal. The corrected artifacts originate from any kind of non-linear modification of the components of a multi-scale image representation.

A gradient representation of the original image is generated and modified. A modification step is applied to gradient images.

A reconstruction process is applied to the modified gradient representation.

US 6 788 826 B1 teaches a multiscale decomposition of an image, a nonlinear modification of edge images and an inverting reconstruction algorithm. The weights used in the reconstruction algorithm are the normal weights of the decomposition algorithm.

It is an object of the present invention to provide a method for enhancing the contrast of an image that is represented by a digital signal that overcomes the prior art inconveniences.

More specifically it is an object of the present invention to provide a new multi-scale contrast enhancement algorithm which results in a contrast enhanced image while preserving the shape of the edge transitions.

SUMMARY OF THE INVENTION

The above-mentioned aspects are realized by a method as defined in the appending claims.

Specific and preferred embodiments of this invention are set out in the dependent claims.

The invention provides that enhanced detail pixel values are created by enhancement of the center differences.

The method of the present invention is different from the prior art multi-scale contrast enhancement for the following reason: the prior art algorithms amplify the detail pixel values by applying the conversion functions directly to the detail pixel values by means of look up tables or multiplicative amplification factors.

The present invention is applicable to all the multi-scale detail representation methods from which the original image can be computed by applying the inverse transform.

The invention is applicable to all the multi-scale decomposition methods wherein the detail pixel are equivalent to the sum of translation difference images or can be computed as a center difference image.

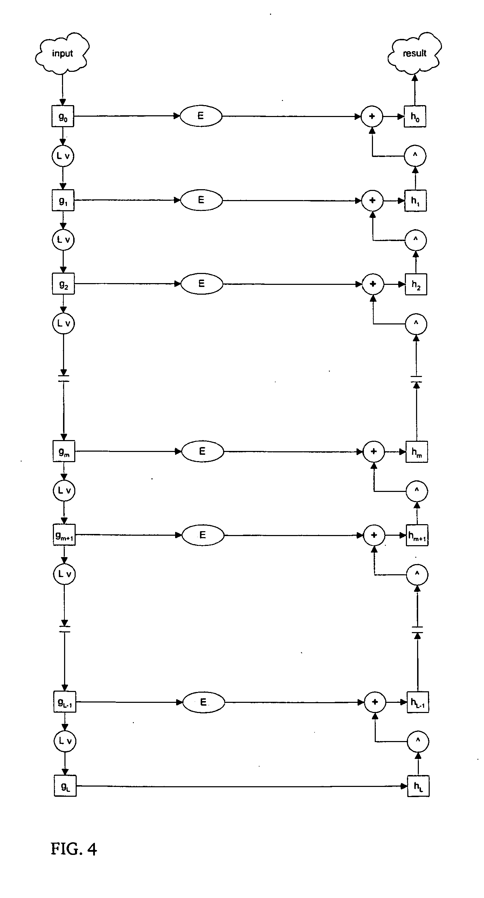

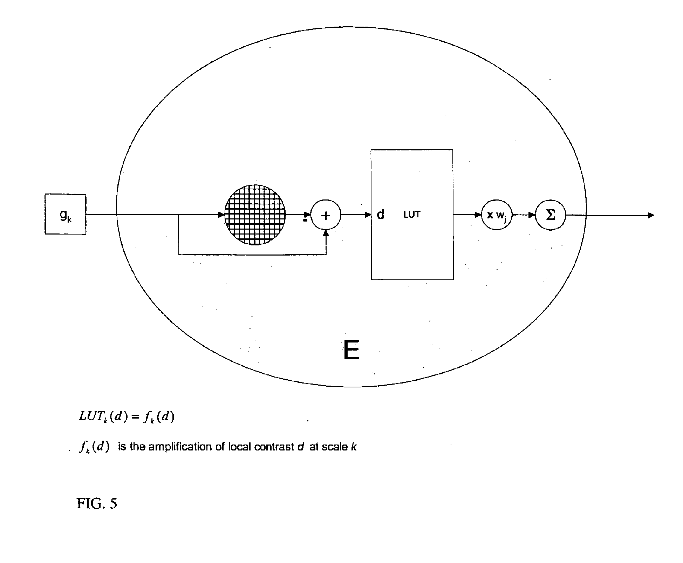

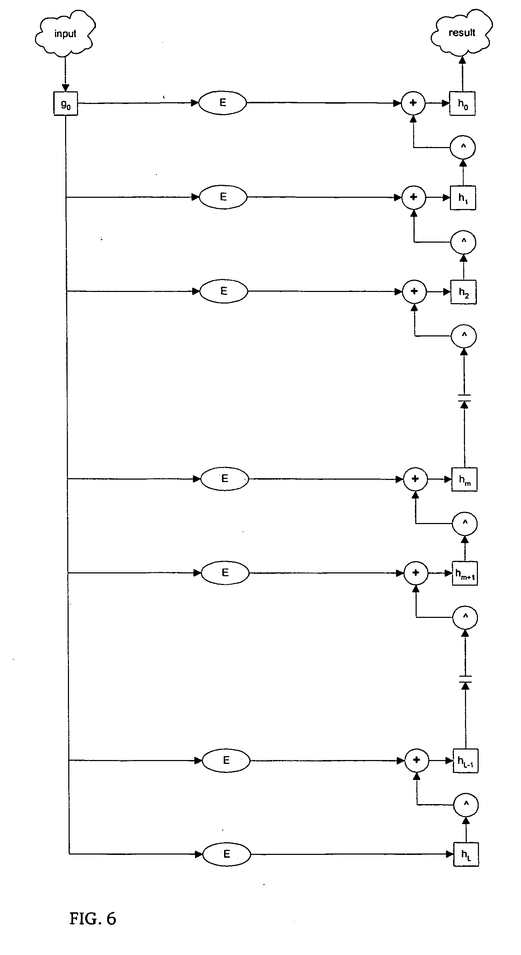

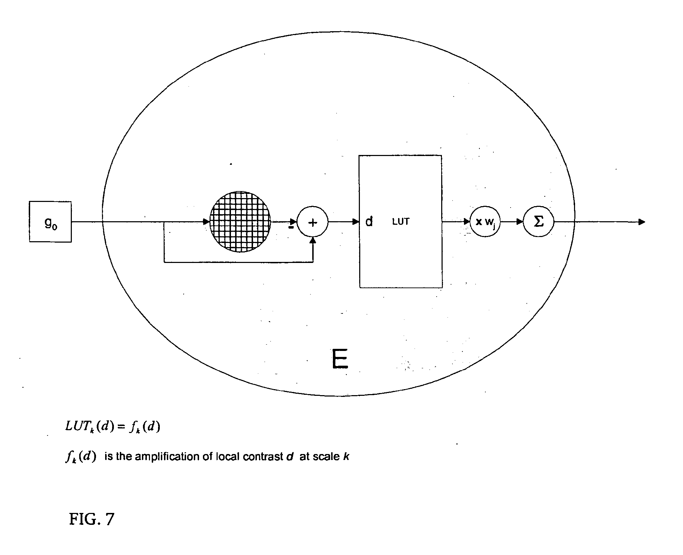

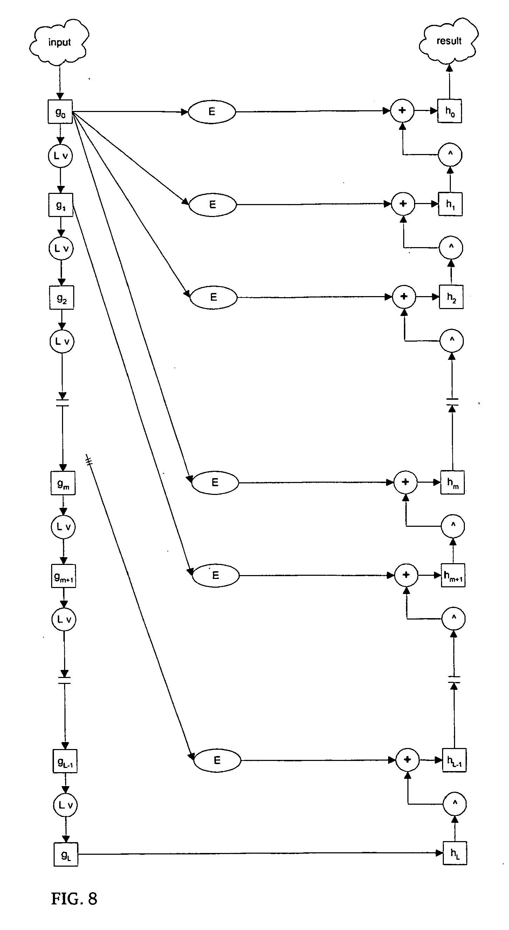

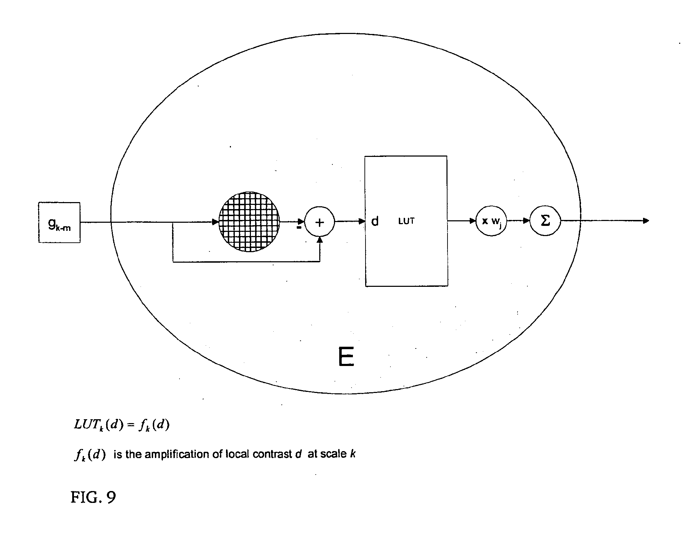

According to the present invention enhanced detail pixel values are directly computed by combining the enhanced center differences at at least one scale. (illustrated in figures 4, 6 and 8 with corresponding enhancement steps being illustrated in figures 5, 7 and 9 respectively)

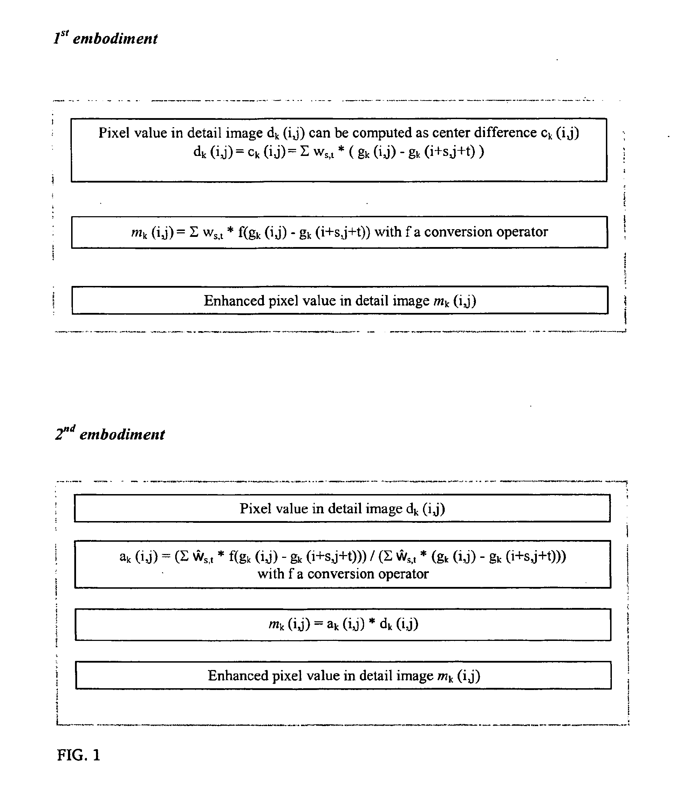

The overall characteristics of the present invention are shown in figure 1.

The present invention is generally implemented as a computer program product adapted to carry out the method of any of the claims when run on a computer and is stored on a computer readable medium.

Further advantages and implementations of the embodiments of the present invention will be explained in the following description and will be illustrated by the drawings.

In the context of the present invention specific terms are defined as follows:

Multi-scale decomposition mechanism:

A multi-scale (or multi-resolution) decomposition of an image is a process that computes detail images of said image at multiple scales of a grey value image. A multi-scale decomposition mechanism generally involves filter banks for computing the detail images. Well-known techniques are for example: the Laplacian pyramid, the Burt pyramid, the Laplacian stack, the wavelet decomposition, QMF filter banks.

Approximation image:

An approximation image is a grey value image that represents the original grey value image at the same or a larger scale, or at the same or a lower resolution. An approximation image at a specific scale is equivalent to the original grey value image in which all details at that scale have been omitted (Mallat S.G.,"A Theory for Multiresolution Signal Decomposition: The Wavelet Representation", IEEE Trans. On Pattern Analysis and Machine Intelligence, vol. 11, no. 7, July 1989).

Detail image:

A detail image is defined as the difference of information between an approximation image at a certain scale and an approximation image at a smaller scale.

Conversion operator:

A conversion operator is operator which generates the pixel-wise modification of the detail pixel values as an intermediate step to create a contrast enhanced version of the grey value image. Such an operator has for example been described in European patent EP 527 525. The modification is defined by a conversion function and can e.g. be implemented as a look up table or as a multiplicative amplification.

Translation difference image:

The translation difference images at a scale s are a measurement of elementary contrast in each pixel of an approximation image at scale s. They can be computed by taking the difference of the approximation image at that scale s and a translated version. Other computations for elementary contrast are possible, e.g. the ratio of pixel with a neighboring pixel can be used in case the processing steps are preceded by an exponential transform and followed by a logarithmic transform.

Center difference image:

A center difference image is computed by applying a combining operator (for example the summation) to translation difference images.
The combining operator can be a linear or non-linear function of corresponding pixel values in the translation difference images.

BRIEF DESCRIPTION OF THE DRAWINGS

Fig. 1 schematically illustrates the steps of the method of the present invention,
Fig. 2 illustrates a multi-resolution image processing method according to the prior art,
Fig. 3 illustrates the image enhancement step of the multi-resolution image processing method illustrated in figure 2,
Fig. 4, 6 and 8 illustrate different implementations of the multi-resolution image processing method according to the present invention,
Fig. 5 illustrates the image enhancement step of the multi-resolution image processing method illustrated in figure 4,
Fig. 7 illustrates the image enhancement step of the multi-resolution image processing method illustrated in figure 6,
Fig. 9 illustrates the image enhancement step of the multi-resolution image processing method illustrated in figure 8,
Fig. 10 illustrates the number of translation difference images and the translations needed in the method of the present invention,

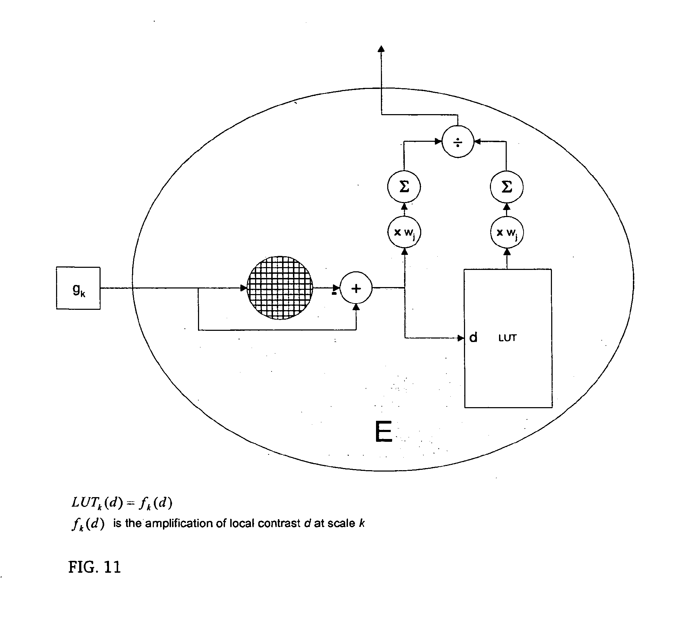

Fig. 11 is a legend pertaining to the symbols used in the above figures.

## DETAILED DESCRIPTION OF THE INVENTION

This contrast enhancement algorithm is applicable to all multi-scale detail representation methods from which the original image can be computed by applying the inverse transformation.

It is applicable to the reversible multi-scale detail representation that can be computed as a weighted sum of translation difference images.
The weighing factors and the translation offsets of the translation difference images can be deducted from the multi-scale decomposition in such a way that the resulting weighted sum of the translation difference images is identical to the detail pixel values.

For these multi-scale detail representations the contrast can be enhanced by applying the conversion operator to the center differences before the weighted sum is computed.

To compute the weighted sum of translation difference images, the approximation image at the same scale (or resolution level) or the approximation images at the smaller scales (or finer resolution levels) can be used.

State-of-the-art multi-scale contrast enhancement algorithms decompose an image into a multi-scale representation comprising detail images representing detail at multiple scales and a residual image.
Some of the important multi-scale decompositions are the wavelet decomposition, the Laplacian-of-Gaussians (or LoG decomposition), the Difference-of-Gaussians (or DoG) decomposition and the Burt pyramid.

The wavelet decomposition is computed by applying a cascade of high-pass and low-pass filters followed by a subsampling step.

The high-pass filter extracts the detail information out of an approximation image at a specific scale.

In the Burt pyramid decomposition the detail information is extracted out of an approximation image at scale $k$ by subtracting the upsampled version of the approximation image at scale $k+1$.

In a state of the art methods as the one disclosed in EP 527 525 a contrast enhanced version of the image is created by conversion of the pixel values in the detail images followed by multi-scale reconstruction.

All above implementations of multiscale decomposition have a common property. Each pixel value in the detail images can be computed out of an approximation image by combining the pixel values in a moving neighborhood.
In the above cases the combining function is a weighted sum.

For the wavelet decomposition the pixel values in the detail image at scale $k$ are computed as:

$$d_{k+1} = \downarrow ( h_d * g_k )$$

$$g_{k+1} = \downarrow ( l_d * g_k )$$

with $h_d$ a high-pass filter, $l_d$ a low-pass filter, * the convolution operator and $\downarrow$ the subsampling operator (i.e. leaving out every second row and column).

For the wavelet reconstruction the enhanced approximation image at scale $k$ is computed as:

$$h_k = l_r * ( \uparrow h_{k+1} ) + h_r * ( \uparrow f ( d_{k+1} ) )$$

with $h_r$ a high-pass filter, $l_r$ a low-pass filter and $\nearrow$ the upsampling operator (i.e. inserting pixels with value 0 in between any two rows and columns).

For the Burt decomposition the pixel values in the detail image at scale $k$ are computed as:

$$d_k = g_k - 4g * ( \uparrow g_{k+1} )$$

or

$$d_k = g_k - 4g * ( \uparrow ( \downarrow ( g * g_k ) ) )$$

or

$$d_k \;=\; (1 \;-\; 4g \;*\; (\uparrow\; (\downarrow\; g\;)\;)\;)\;*\; g_k$$

with g a Gaussian low-pass filter and *1* the identity operator.

For the Burt reconstruction the enhanced approximation image at scale *k* is computed as:

$$h_k \;=\; 4g \;*\; (\;\uparrow\; h_{k+1}\;) \;+\; f\;(\; d_k\;)$$

with f( x) the conversion operator.

### *The multi-scale detail pixel values as weighted sums*

Suppose that in the Burt multi-scale decomposition a 5x5 Gaussian filter is used with coefficients $w_{k,l}$ with k = -2,...2 and 1 = -2,...,2, the subsampling operator removes every second row and column and the upsampling operator inserts pixels with value 0 in between any two rows and columns.

The pixel at position i,j in the approximation image $g_{k+1}$ is computed as:

$$g_{k+1}(i,j) = \sum_{s=-2}^{2}\sum_{t=-2}^{2} w_{s,t}\, g_k(2i+s, 2j+t)$$

The pixel at position *i,j* in the upsampled image $u_k$ is computed as:

$$u_k(i,j) = \begin{cases} \displaystyle\sum_{s=-2}^{2}\sum_{t=-2}^{2} w_{s,t}\, g_k(i+s, j+t) & \text{if } i \text{ and } j \text{ are even} \\ 0 & \text{otherwise} \end{cases}$$

The pixel at position *i,j* in the upsampled, smoothed image $gu_k$ is computed as:

$$gu_k(i,j) = \begin{cases} \displaystyle\sum_{m=\{-2,0,2\}}\sum_{n=\{-2,0,2\}} w_{m,n}\sum_{s=-2}^{2}\sum_{t=-2}^{2} w_{s,t}\, g_k(i+s+m, j+t+n) & \text{if } i \text{ and } j \text{ are even} \\ \displaystyle\sum_{m=\{-1,1\}}\sum_{n=\{-2,0,2\}} w_{m,n}\sum_{s=-2}^{2}\sum_{t=-2}^{2} w_{s,t}\, g_k(i+s+m, j+t+n) & \text{if } i \text{ is odd and } j \text{ is even} \\ \displaystyle\sum_{m=\{-2,0,2\}}\sum_{n=\{-1,1\}} w_{m,n}\sum_{s=-2}^{2}\sum_{t=-2}^{2} w_{s,t}\, g_k(i+s+m, j+t+n) & \text{if } i \text{ is even and } j \text{ is odd} \\ \displaystyle\sum_{m=\{-1,1\}}\sum_{n=\{-1,1\}} w_{m,n}\sum_{s=-2}^{2}\sum_{t=-2}^{2} w_{s,t}\, g_k(i+s+m, j+t+n) & \text{if } i \text{ and } j \text{ are odd} \end{cases}$$

Finally, the pixel at position *i,j* in the detail image $d_k$ is computed as:

$$d_k(i,j) = \begin{cases} g_k(i,j) - 4 \sum_{m=\{-2,0,2\}} \sum_{n=\{-2,0,2\}} w_{m,n} \sum_{s=-2}^{2} \sum_{t=-2}^{2} w_{s,t} g_k(i+s+m, j+t+n) & \text{if } i \text{ and } j \text{ are even} \\ g_k(i,j) - 4 \sum_{m=\{-1,1\}} \sum_{n=\{-2,0,2\}} w_{m,n} \sum_{s=-2}^{2} \sum_{t=-2}^{2} w_{s,t} g_k(i+s+m, j+t+n) & \text{if } i \text{ is odd and } j \text{ is even} \\ g_k(i,j) - 4 \sum_{m=\{-2,0,2\}} \sum_{n=\{-1,1\}} w_{m,n} \sum_{s=-2}^{2} \sum_{t=-2}^{2} w_{s,t} g_k(i+s+m, j+t+n) & \text{if } i \text{ is even and } j \text{ is odd} \\ g_k(i,j) - 4 \sum_{m=\{-1,1\}} \sum_{n=\{-1,1\}} w_{m,n} \sum_{s=-2}^{2} \sum_{t=-2}^{2} w_{s,t} g_k(i+s+m, j+t+n) & \text{if } i \text{ and } j \text{ are odd} \end{cases}$$

Generally, the pixel at position $i,j$ in the detail image $d_k$ can be computed as a weighted sum of pixels in the approximation image at the same or smaller scale $k, k-1, k-2,...$ :

$$d_k(i,j) = g_l(ri,rj) - \sum_m \sum_n v_{m,n} g_l(ri+m, rj+n)$$

with $1 \in \{0, .., k\}$ and $r = subsampling\_factor^{(1-k)}$

Because

$$\sum_m \sum_n v_{m,n} = 1$$

the pixel at position $i,j$ in the detail image $d_k$ can be computed as:

$$d_k(i,j) = g_l(ri,rj) - \sum_m \sum_n v_{m,n} g_l(ri+m, rj+n)$$

$$d_k(i,j) = \sum_m \sum_n v_{m,n} g_l(ri,rj) - \sum_m \sum_n v_{m,n} g_l(ri+m, rj+n)$$

$$d_k(i,j) = c_k(i,j) = \sum_m \sum_n v_{m,n} \left( g_l(ri,rj) - g_l(ri+m, rj+n) \right)$$

The term $g_l(ri,rj) - g_l(ri+m,rj+n)$ is called a translation difference. It expresses the difference in pixel value between a central pixel and a neighboring pixel in an approximation image. It is a measure of local contrast.
The weighted sum of the translation differences is called a centre difference $c_k(i,j)$.

In a similar way it can be proven that the detail images in other multi-scale decomposition methods can also be represented as a combination of translation difference images.

*The conversion operation*

In state-of-the-art methods like the one disclosed in EP 527 525 contrast enhancement is obtained by applying a conversion operator $f(x)$ to the detail image $d_k$ or, equivalently:

$$f\left(d_k(i,j)\right) = f\left(g_l(ri,rj) - \sum_m \sum_n v_{m,n} g_l(ri+m, rj+n)\right)$$

An example of such a conversion operator is the sigmoid function. Another example of such conversion operator is the contrast enhancement function like the one disclosed in EP 525 527. The shape of the conversion operator depends on the specific requirements of the enhancement which is intended to amplify the low-value detail pixel more than the high-value detail pixels.

The conversion step may cause deformations of the shape of the edge transitions in the reconstructed, contrast enhanced image. The reason is the non-linearity of the conversion function.

Generally, the following applies to non-linear functions:

$$f(x+y) \neq f(x) + f(y)$$

or

$$f\left(\sum_i x_i\right) \neq \sum_i f(x_i)$$

State-of-the-art algorithms first compute the pixel values in the detail image $d_k$ as weighted sums and apply the conversion step afterwards.

By rewriting the pixel values in the detail image $d_k$ as a weighted sum of translation differences, it is possible to apply the conversion step before the summation instead of afterwards.

Contrast enhancement is now obtained by applying the conversion step to the translation differences:

$$f\left(d_k(i,j)\right) = \sum_m \sum_n v_{m,n} f\left(g_l(ri,rj) - g_l(ri+m, rj+n)\right)$$

In this way the shape of the edge transitions is better preserved in the contrast enhanced, reconstructed image.

If for every scale $k$ the detail image at that scale is computed out of the full resolution image $g_0$, and enhancement is applied to the center differences, then the shapes of the edge transitions are best preserved after reconstruction.

Different implementations of the present invention are illustrates in figures 4, 6 and 8 with the corresponding enhancement steps being illustrated in figures 5, 7 and 9.

First the translation difference images are computed. This is done by subtracting a translated version of the approximation image $g_1$ from the approximation image $g_1$ itself.

The number of translation difference images and the translations needed, are defined by the spatial extent of the cascade of filters used in the multi-scale decomposition to compute a detail image at scale k out of an approximation image at scale 1 element of {0, ...k}.

For example, in case of a 5x5 Gaussian filter in the Burt decomposition and given the fact that the approximation image at the same scale as the detail image is used, 9x9 = 81 translation difference images are needed.

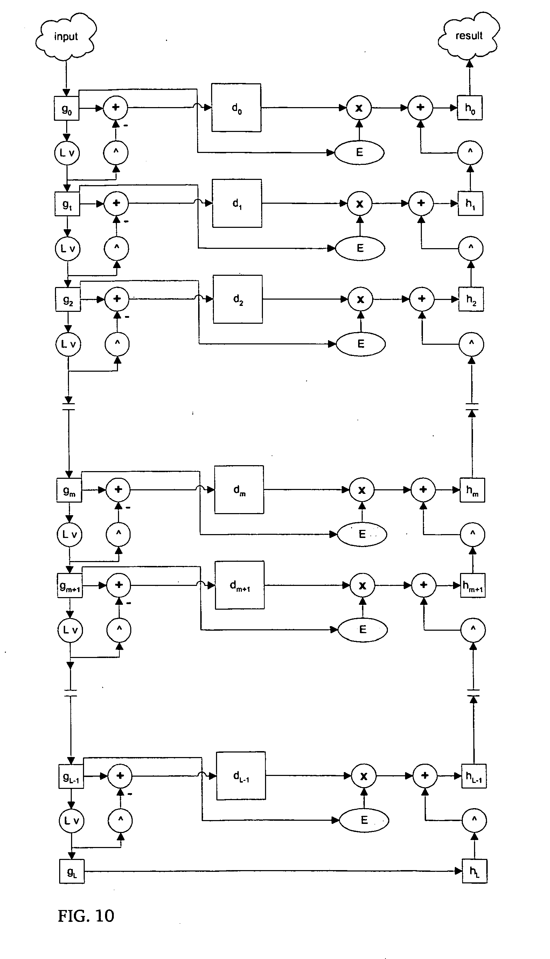

Figure 10 schematically shows the 1D situation.

For each pixel position $i,j$ in the detail image the weights $w_{m,n}$ are computed such that the weighted sum of the translation differences matches exactly the pixel value as would be generated by straightforward application of the Burt decomposition as described higher.

Contrast enhancement is obtained by non-linear conversion of the translation difference images.

At least one enhanced center difference image is computed as the weighted sum of the contrast enhanced translation difference images, using the weights $w_{m,n}$.

The reconstructed, contrast enhanced version of the image is computed by applying the multi-scale reconstruction to the enhanced center difference images.

The condition for the weights $w_{m,n}$ as formulated above is required for the multi-scale decomposition/reconstruction algorithm disclosed above to be reversible in case the conversion step is excluded.

## Claims

1.  A method of enhancing the contrast of an image that is represented by a digital signal wherein

    - at least one approximation image is created at one or multiple scales, by applying a multi-scale decomposition algorithm to said image, an approximation image at a scale representing the grey values of said image in which all details at that scale referred to as corresponding detail image, have been omitted,
    - translation difference images are created by pixel-wise subtracting the values of an approximation image at scale s and the values of translated versions of said approximation image,
    - the values of said translation difference images are nonlinearly modified,
    - at least one enhanced center difference image at a specific scale is computed by combining said modified translation difference images at that scale or a smaller scale with weights $w_{i,j}$ wherein said weights $w_{i,j}$ are selected in accordance with said image decomposition algorithm such that, if said enhancement by non-linear modification were not performed, an equivalent of said multi-scale decomposition of said image would be obtained such that said at least one center difference image would equal the detail image at said specific scale,
    - an enhanced image is computed by applying the image reconstruction algorithm which reverses said image decomposition algorithm to the image decomposition that results after said detail image at said specific scale has been replaced by said at least one enhanced center difference image.

2.  A method according to claim 1 wherein a translation difference image at a specific scale is computed out of an approximation image at the same scale.

3.  A method according to claim 1 modified in that all of said translation difference images are computed out of the original image.

4.  A method according to claim 1 wherein a translation difference image at a scale k is computed out of an approximation image at scale m, wherein m represents a scale between scale 1 and scale k-1.

5.  A method according to claim 1 or 4 wherein the center difference images are identical to the multi-scale detail images.

6.  A method according to any of the preceding claims wherein said image is a mammographic image.

7.  A method according to any of the preceding claims wherein said image is a CT image.

8.  A computer program product adapted to carry out the steps of the method of any of the preceding claims when run on a computer.

9.  A computer readable medium comprising computer executable program code adapted to carry out the steps of the method of any of the claims 1-7 when executed on a computer.

## Patentansprüche

1.  Ein durch die nachstehenden Schritte gekennzeichnetes Verfahren zur Verstärkung des Kontrasts eines durch ein digitales Signal dargestellten Bildes :

    - Erzeugung von zumindest einem Näherungsbild bei einer oder mehreren Skalen durch Anwendung eines Multiskalen-Zerlegungsalgorithmus auf das Bild, wobei ein Näherungsbild bei einer bestimmten Skala die Grauwerte des Bildes darstellt, in dem alle als entsprechendes Detailbild bezeichneten Details bei dieser Skala weggelassen sind,
    - Erstellen von Translationsdifferenzenbildern durch pixelweises Subtrahieren der Werte eines Näherungsbildes bei Skala s und der Werte translatierter Versionen des Näherungsbildes,
    - nichtlineare Modifizierung der Werte der Translationsdifferenzenbilder,
    - Berechnung von zumindest einem verbesserten Zentraldifferenzenbild bei einer vorgegebenen Skala durch Kombinieren der modifizierten Translationsdifferenzenbilder bei dieser oder kleinerer Skala mit Gewichten $w_{i,j}$, wobei die Gewichte $w_{i,j}$ gemäß dem Bildzerlegungsalgorithmus so gewählt werden, dass, wenn die Kontrastverbesserung durch nichtlineare Modifizierung nicht vorgenommen werden würde, ein Äquivalent der Multiskalenzerlegung des Bildes erhalten werden würde, wobei das zumindest eine Zentraldifferenzenbild dem Detailbild bei der vorgegebenen Skala gleich sein würde, und
- Berechnung eines kontrastverstärkten Bildes durch Anwendung des Bildrekonstruktionsalgorithmus, der den Bildzerlegungsalgorithmus auf die Bildzerlegung umkehrt, die erhalten wird, nachdem das Detailbild bei der vorgegebenen Skala durch das zumindest eine kontrastverstärkte Zentraldifferenzenbild ersetzt worden ist.

**2.** Verfahren nach Anspruch 1, **dadurch gekennzeichnet, dass** ein Translationsdifferenzenbild bei einer vorgegebenen Skala aus einem Näherungsbild bei der gleichen Skala berechnet wird.

**3.** Verfahren nach Anspruch 1, das so modifiziert ist, dass alle Translationsdifferenzenbilder aus dem Originalbild berechnet werden.

**4.** Verfahren nach Anspruch 1, **dadurch gekennzeichnet, dass** ein Translationsdifferenzenbild bei Skala k aus einem Näherungsbild bei Skala m berechnet wird, wobei m eine Skala zwischen Skala 1 und Skala k-1 bedeutet.

**5.** Verfahren nach Anspruch 1 oder 4, **dadurch gekennzeichnet, dass** die Zentraldifferenzenbilder den Multiskalen-Detailbildern gleich sind.

**6.** Verfahren nach einem der vorstehenden Ansprüche, **dadurch gekennzeichnet, dass** das Bild ein Mammografiebild ist.

**7.** Verfahren nach einem der vorstehenden Ansprüche, **dadurch gekennzeichnet, dass** das Bild ein CT-Bild ist.

**8.** Ein Computerprogrammprodukt, das bei Verwendung auf einem Computer die Ausführung der Schritte des Verfahrens nach einem der vorstehenden Ansprüche sichert.

**9.** Ein computerlesbares Medium, enthaltend einen auf einem Computer ausführbaren Programmcode, der bei Verwendung auf einem Computer die Ausführung der Schritte des Verfahrens nach einem der Ansprüche 1 bis 7 sichert.

## Revendications

**1.** Un procédé pour le rehaussement du contraste d'une image représentée par un signal numérique, ledit procédé comprenant les étapes ci-après :

- la génération d'au moins une image d'approximation à une échelle ou à échelles multiples en appliquant un algorithme de décomposition à échelles multiples à l'image, une image d'approximation à une échelle prédéfinie représentant les niveaux de gris de l'image dans laquelle sont omis tous les détails à ladite échelle étant désignés comme image détaillée correspondante,
- la génération d'images de différences de translation en soustrayant, pixel par pixel, les valeurs d'une image d'approximation à l'échelle s et les valeurs de versions translatées de l'image d'approximation,
- la modification non linéaire des valeurs des images de différences de translation,
- le calcul d'au moins une image de différences centrales à contraste rehaussé à une échelle prédéfinie en combinant les images de différences de translation modifiées à ladite échelle ou à une échelle plus petite et ce en utilisant les poids $w_{i,j}$, où les poids $w_{i,j}$ sont choisis conformément à l'algorithme de décomposition d'image de façon à ce que, si le rehaussement de contraste par modification non linéaire n'était pas effectué, un équivalent de la décomposition à échelles multiples de l'image soit obtenu et ce de façon à ce que ladite au moins une image de différences centrales soit égale à l'image détaillée à ladite échelle prédéfinie, et
- le calcul d'une image à contraste rehaussé par application de l'algorithme de reconstruction d'image inversant l'algorithme de décomposition d'image à la décomposition d'image obtenue après le remplacement de l'image détaillée à ladite échelle prédéfinie par ladite au moins une image de différences centrales à contraste rehaussé.

**2.** Procédé selon la revendication 1, **caractérisé en ce qu'**une image de différences de translation à une échelle prédéfinie est calculée à partir d'une image d'approximation à la même échelle.

**3.** Procédé selon la revendication 1, modifié de façon à ce que toutes les images de différences de translation soient calculées à partir de l'image originale.

**4.** Procédé selon la revendication 1, **caractérisé en ce qu'**une image de différences de translation à l'échelle k est calculée à partir d'une image d'approximation à l'échelle m, où m représente une échelle comprise entre l'échelle 1 et l'échelle k-1.

5. Procédé selon la revendication 1 ou 4, **caractérisé en ce que** les images de différences centrales sont égales aux images détaillées à échelles multiples.

6. Procédé selon l'une quelconque des revendications précédentes, **caractérisé en ce que** l'image est une image mammographique.

7. Procédé selon l'une quelconque des revendications précédentes, **caractérisé en ce que** l'image est une image CT.

8. Un produit de programme informatique qui, lorsqu'il est utilisé sur un ordinateur, assure l'exécution des étapes du procédé selon l'une quelconque des revendications précédentes.

9. Un support lisible par ordinateur, comprenant un code de programme exécutable sur ordinateur qui, lorsqu'il est exécuté sur un ordinateur, assure l'exécution des étapes du procédé selon l'une quelconque des revendications 1 à 7.

*1ˢᵗ embodiment*

Pixel value in detail image $d_k$ (i,j) can be computed as center difference $c_k$ (i,j)
$$d_k (i,j) = c_k (i,j) = \Sigma \, w_{s,t} * ( g_k (i,j) - g_k (i+s,j+t) )$$

$m_k$ (i,j) $= \Sigma \, w_{s,t} * f(g_k (i,j) - g_k (i+s,j+t))$ with f a conversion operator

Enhanced pixel value in detail image $m_k$ (i,j)

*2ⁿᵈ embodiment*

Pixel value in detail image $d_k$ (i,j)

$a_k$ (i,j) $= (\Sigma \, \hat{w}_{s,t} * f(g_k (i,j) - g_k (i+s,j+t))) / (\Sigma \, \hat{w}_{s,t} * (g_k (i,j) - g_k (i+s,j+t)))$
with f a conversion operator

$m_k$ (i,j) $= a_k$ (i,j) $* d_k$ (i,j)

Enhanced pixel value in detail image $m_k$ (i,j)

FIG. 1

FIG. 2

$$LUT_k(d) = f_k(d)$$

$f_k(d)$ is the amplification of local contrast $d$ at scale $k$

FIG. 3

FIG. 4

$$LUT_k(d) = f_k(d)$$

$f_k(d)$ is the amplification of local contrast $d$ at scale $k$

FIG. 5

FIG. 6

$LUT_k(d) = f_k(d)$

$f_k(d)$ is the amplification of local contrast $d$ at scale $k$

FIG. 7

FIG. 8

$$LUT_k(d) = f_k(d)$$

$f_k(d)$ is the amplification of local contrast $d$ at scale $k$

FIG. 9

FIG. 10

$$LUT_k(d) = f_k(d)$$

$f_k(d)$ is the amplification of local contrast $d$ at scale $k$

FIG. 11

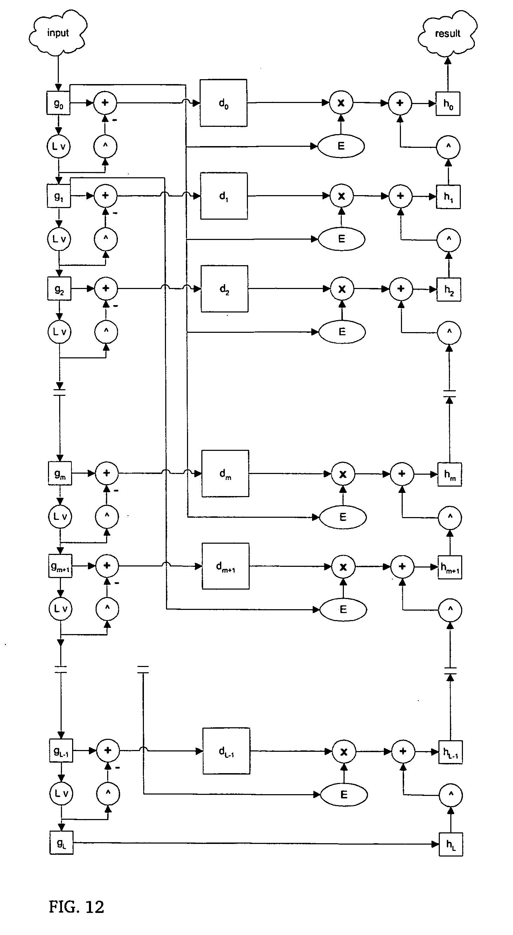

FIG. 12

$$LUT_k(d) = f_k(d)$$

$f_k(d)$ is the amplification of local contrast $d$ at scale $k$

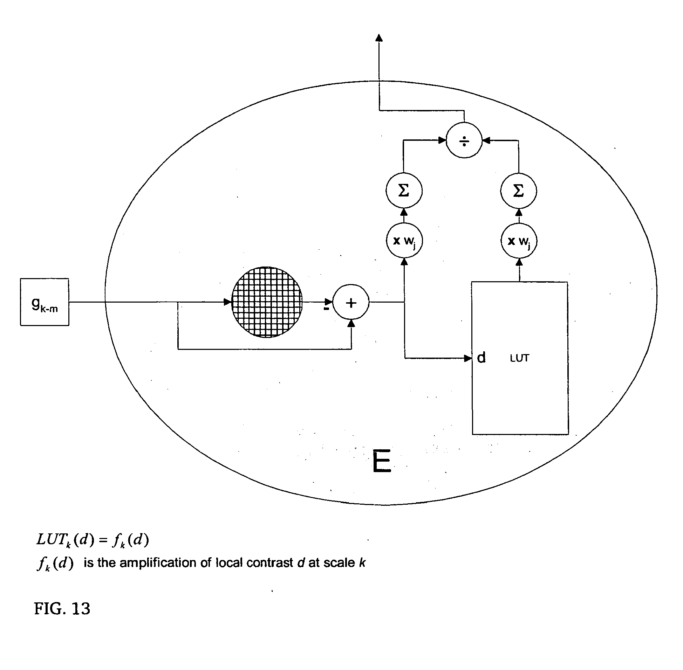

FIG. 13

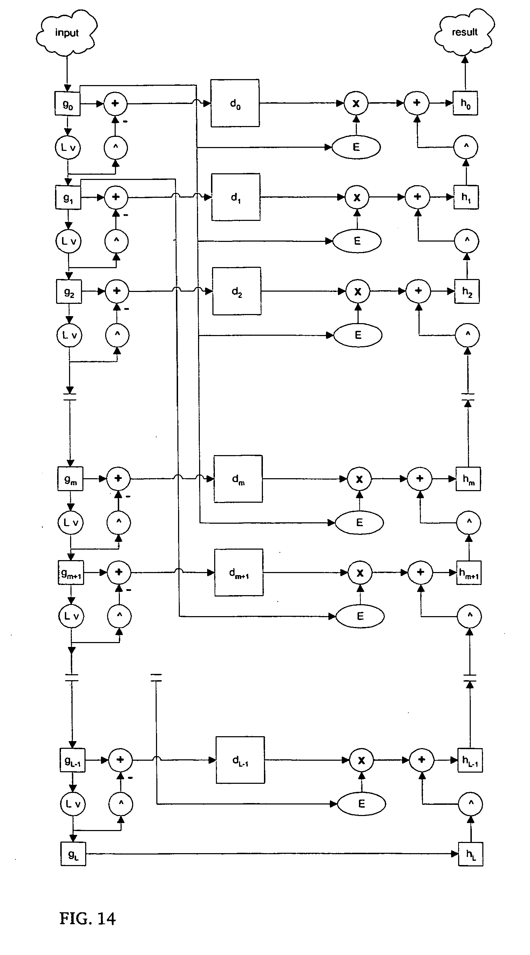

FIG. 14

$$LUT_k(d) = f_k(d)$$

$f_k(d)$ is the amplification of local contrast $d$ at scale $k$

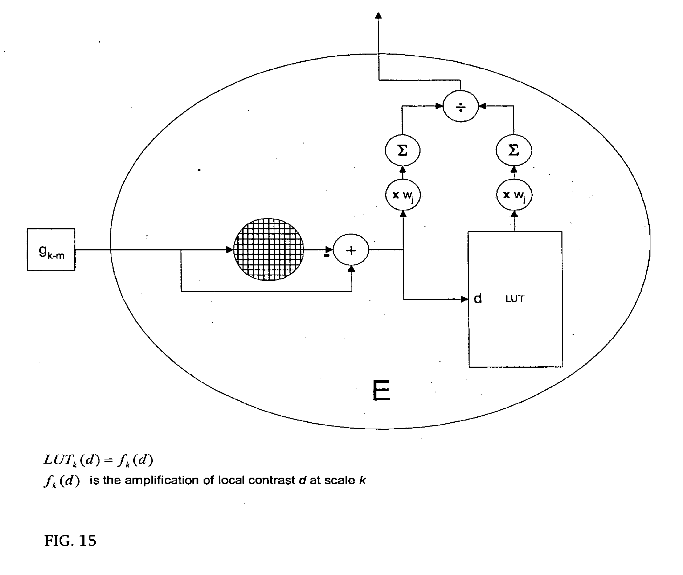

FIG. 15

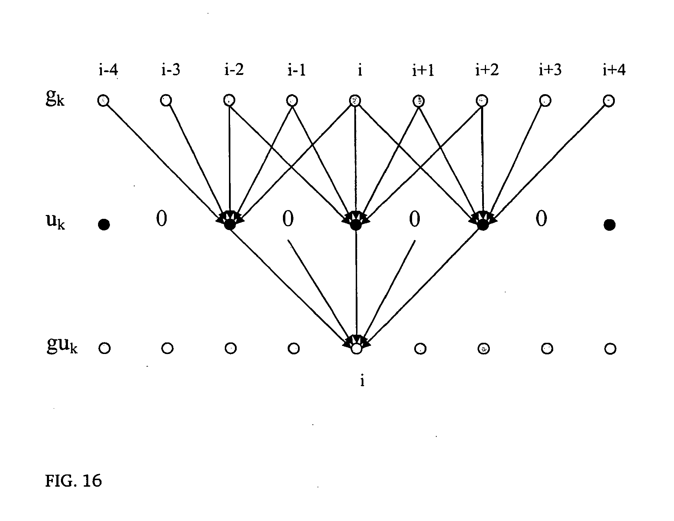

FIG. 16

| Symbol | |
|---|---|
| $g_k$ | Approximation image at scale k |
| $d_k$ | Detail image at scale k |
| $h_k$ | Contrast enhanced approximation image at scale k |
| (L v) | Low-pass filtering of input image, followed by subsampling |
| (^) | Upsampling |
| (+) | Addition |
| (x) | Multiplication |
| (Σ) | Summation |
| (÷) | Division |
| ⊞ | Moving neighborhood operator (used to compute the translation differences) |
| (x w_j) | Weighing operator |
| LUT | Conversion operator |

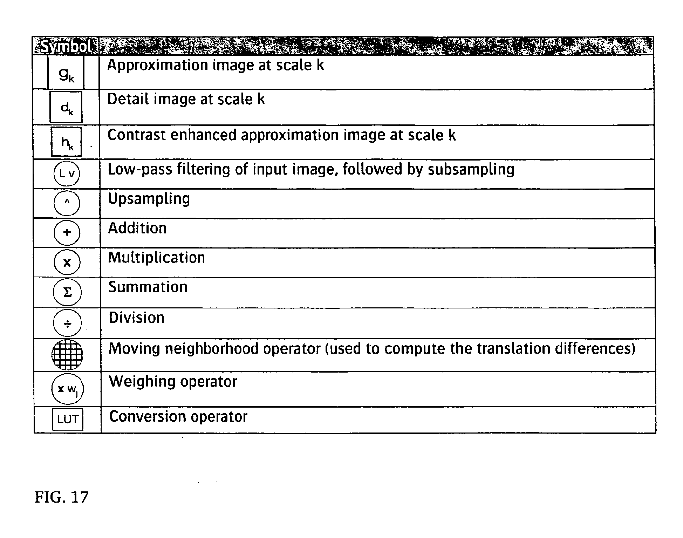

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6731790 B1
- US 6788826 B1
- EP 527525 A
- EP 525527 A

### Non-patent literature cited in the description

- **MALLAT S.G.** A Theory for Multiresolution Signal Decomposition: The Wavelet Representation. *IEEE Trans. On Pattern Analysis and Machine Intelligence,* July 1989, vol. 11 (7